# EUROPÄISCHE PATENTANMELDUNG

(11) **EP 2 524 761 A1**
(43) Veröffentlichungstag der Anmeldung: **21.11.2012**
(21) Anmeldenummer: 12168179.5
(22) Anmeldetag: 16.05.2012
(51) Int. Cl.: B23K 26/00, B21D 37/08

(54) **Bearbeitungswerkzeug mit mindestens zwei Arbeitsstationen**

(30) Priorität: 16.05.2011 DE 102011050383
(71) Anmelder: Fraunhofer-Gesellschaft zur Förderung der angewandten Forschung e.V., 80686 München (DE); Scheuermann & Heilig GmbH, 74722 Buchen-Hainstadt (DE)
(72) Erfinder: Emonts, Michael, 52064 Aachen (DE); Bundschuh, Wieland, 74722 Buchen-Hainstadt (DE)
(74) Vertreter: Naeven, Ralf

(57) **Zusammenfassung**

Bei einem Bearbeitungswerkzeug mit mindestens zwei Arbeitsstationen, von denen mindestens eine zur umformenden und/oder trennenden Bearbeitung eines Werkstückes (13) dient, wird vorgeschlagen, Mittel (9, 12) zur Einstrahlung von Laserstrahlung (11) auf das zu bearbeitende Werkstück (13) im Bearbeitungswerkzeug zu integrieren. Dabei können in mindestens einer der Arbeitsstationen sowohl die Mittel (9, 12) zur Einstrahlung von Laserstrahlung (11) als auch zur umformenden und/oder trennenden Bearbeitung des Bleches dienende, mechanisch wirkende Werkzeuge angeordnet sein, wobei die Laserstrahlung (11) zur Vorbereitung, Unterstützung und/oder Nachbereitung der umformenden und/oder trennenden Bearbeitung vorgesehen ist. Bei dem Bearbeitungswerkzeug handelt es sich vorzugsweise um ein Folgeverbund- oder ein Transferwerkzeug.

## Beschreibung

Die Erfindung betrifft ein Bearbeitungswerkzeug gemäß dem Oberbegriff des Anspruchs 1.

In einem Bearbeitungswerkzeug mit mehreren Arbeitsstationen werden zeitlich aufeinander folgend mehrere Arbeitsschritte auf ein Werkstück ausgeübt, welches durch das Bearbeitungswerkzeug transportiert wird. In den einzelnen Arbeitsstationen wird das Werkzeug jeweils mittels Werkzeugelementen bearbeitet. Unter einem solchen Bearbeitungswerkzeug werden insbesondere Folgeverbundwerkzeuge und/oder Transferwerkzeuge verstanden. In der Regel werden derartige Bearbeitungswerkzeuge zur Bearbeitung von Blechen eingesetzt, wobei die Arbeitsschritte insbesondere auch Trennvorgänge oder Umformvorgänge umfassen können. Das Trennen kann zum Beispiel durch Scherschneiden, das Umformen zum Beispiel durch Biegen, Tiefziehen, Prägen oder Fließpressen erfolgen. Weitere Arbeitsschritte innerhalb eines Bearbeitungswerkzeuges sind denkbar.

Aus der WO 2006/027008 A1 ist mit einem Folgeverbundwerkzeug ein Bearbeitungswerkzeug der eingangs genannten Art bekannt, welches zur Herstellung sehr dünner und strukturierter Metallfolien dient, wobei bei mindestens zwei Strukturen eine der Strukturen die andere überlagert. Die bekannte Vorrichtung weist ein Werkzeugunterteil sowie ein Werkzeugoberteil und dabei mindestens drei räumlich getrennte Arbeitsbereiche auf, nämlich einen Stanzbereich, einen primären Formgebungsbereich für die erste Struktur und einen sekundären Formgebungsbereich für die zweite Struktur.

Typischerweise erlaubt die Bauweise eines Folgeverbundwerkzeugs die Verarbeitung von einer Rolle abgewickelter Blechbänder. In Folgeverbund- oder Transferwerkzeugen können aber auch einzelne Werkstücke in Abfolge bearbeitet werden.

Folgeverbundwerkzeuge und Transferwerkzeuge sind in der Regel in einem Pressensystem eingebaut, wobei der Pressenstößel üblicherweise mit einem Werkzeugoberteil des Folgeverbund- oder Transferwerkzeugs verbunden ist. Das Werkzeugunterteil ist dann ortsfest mit einem starren Pressentisch verbunden.

Aus der DE 102 48 207 B4 ist eine Vorrichtung zum Scherschneiden von Werkstücken bekannt, bei der der Scherschneideprozess durch Einstrahlung von Laserstrahlung zur Wärmeerzeugung an dem Scherschneideort des Werkstückes unterstützt wird. Dabei kann die Laserstrahlung durch eine Bohrung durch das Schneidwerkzeug hindurch auf die Blechoberfläche eingestrahlt werden. Es ist auch offenbart, die Laserstrahlung auf die Rückseite des zu bearbeitenden Werkstückes einzustrahlen. Durch die über die Laserstrahlung in das Werkstück eingebrachte Wärmeenergie wird die Festigkeit des Werkstückes herabgesetzt, so dass zum einen die aufzubringenden Prozesskräfte verringert und zum anderen die Schnittkantenqualität verbessert werden kann. Des Weiteren kann durch die Erwärmung der in einer Umformstufe erreichbare maximale Umformgrad, z.B. für Zieh- und Biegevorgänge, deutlich erhöht werden, da die Bruchdehnung mit der Temperatur ansteigt. Der Stand der Technik bezeichnet die Vorrichtung insbesondere vorteilhaft für die Bearbeitung metallischer Bauteile kleiner Abmessungen im Millimeterbereich. Die Einstrahlung der Laserstrahlung durch den Schneidstempel hindurch steht dem Einsatz von Standard-Scherschneidwerkzeugen entgegen.

Aus der Dissertation von Dr. Michael Emonts "Laserunterstütztes Scherschneiden hochfester Blechwerkstoffe" (Dissertation RWTH Aachen, 2010) ist ein laserunterstütztes Scherschneiden mit Laserbestrahlung der Blechunterseite bekannt, wobei die Laserbestrahlung auf die Blechunterseite auftrifft, kurz bevor der Schneidstempel in Werkstückkontakt mit der Blechoberseite tritt. Mittels der Laserbestrahlung der Blechunterseite und der daraus resultierenden lokalen Absorption der Laserenergie soll der Werkstoff in der Scherzone erwärmt werden, so dass in dem Bereich des Werkstoffgefüges, wo die größten Druck- und Zugspannungen während des Scherschneidens auftreten, das Fließvermögen des Werkstoffes durch wärmebedingte lokale Entfestigung gesteigert wird. Die Laserbestrahlung der Blechunterseite durch eine Matrize hindurch hat zum einen den prozesstechnologischen Vorteil, dass der Bereich des Werkstoffs in der Scherzone entfestigt wird, der sich nahe an der Matrizenschneidkante befindet. Hier treten beim konventionellen Scherschneiden beim Überschreiten der Schubbruchgrenze des Werkstoffes die ersten Risse, ausgehend von der Matrizenschneidkante, auf. Zum anderen können die Laserleistung und die Laserbestrahlungszeit so eingestellt werden, dass die zur Entfestigung benötigte Mindesttemperatur lediglich im bruchgefährdeten Bereich erreicht wird. Entlang der Scherlinien müssen hierzu die Isothermen der Entfestigungstemperatur lediglich den Bereich der Blechdicke, ausgehend von der Matrizen-Auflage, erreichen, der beim konventionellen Scherschneiden den Bruchanteil der Trennfläche aufweist. Zudem wird durch die Bestrahlung der Blechunterseite die thermische Belastung des Schneidstempels minimal gehalten. Die Laserstrahlung wird eingestrahlt, wenn sich das Blech in der Bearbeitungsposition befindet.

Bei den vorgenannten Vorrichtungen zum laserunterstützten Bearbeiten von Werkstücken handelt es sich jeweils um solche, bei denen verschiedene Werkzeugelemente, im dargestellten Beispiel ein Laser und ein Stanz- oder Schneidwerkzeug in derselben Arbeitsstation zeitlich nacheinander oder gleichzeitig auf das Werkstück einwirken. Bearbeitungswerkzeuge mit verschiedenen örtlich getrennten Arbeitsstationen, sind in diesem Zusammenhang nicht offenbart.

Es ist nun Aufgabe der vorliegenden Erfindung, ein Bearbeitungswerkzeug der eingangs genannten Art zur Verfügung zu stellen, welches gegenüber dem Stand der Technik eine deutliche Erweiterung der Bearbeitungsmöglichkeiten, verbesserte Arbeitsergebnisse und/oder einen geringeren Werkzeugverschleiß bei der trennenden und/oder umformenden Werkstückverarbeitung mit sich bringt.

Bei einem Bearbeitungswerkzeug der eingangs genannten Art wird diese Aufgabe durch die kennzeichnenden Merkmale des Anspruchs 1 gelöst.

Demnach sind Mittel zur Bearbeitung eines Werkstückes mit Laserstrahlung in dem Bearbeitungswerkzeug integriert. Die Integration der Mittel zur Bearbeitung eines Werkstückes mit Laserstrahlung führen zu Bearbeitungsmöglichkeiten, die bislang in Bearbeitungswerkzeugen der eingangs genannten Art, insbesondere in Folgeverbund-und/oder Transferwerkzeugen, nicht möglich waren. Darüber hinaus sorgen die erwärmten Werkstücke insbesondere aufgrund der verringerten Festigkeit zum einen für einen verringerten Werkzeugverschleiß. Zum anderen können nun durch Umformprozesse Geometrien wirtschaftlich erzeugt werden, für die bislang in der Regel eine spanende Nachbearbeitung oder zusätzliche Montagevorgänge notwendig waren.

Bei den Mitteln zur Bearbeitung mit Laserstrahlung kann es sich um eine Laserquelle handeln und/oder um Mittel zur Weiterleitung, Verteilung, Umleitung und/oder Formung der aus der Laserquelle stammenden Laserstrahlung, z.B. Lichtleitfasern, Linsen und/oder Spiegel. Die Laserquelle und weitere vorgenannte Mittel können sich auch außerhalb des eigentlichen Bearbeitungswerkzeuges befinden.

Bevorzugt handelt es sich bei dem erfindungsgemäßen Bearbeitungswerkzeug um ein Folgeverbundwerkzeug oder um ein Transferwerkzeug.

Es kann vorgesehen sein, mindestens eine Arbeitsstation allein für die Laserbearbeitung einzusetzen, zum Beispiel zum Laserschneiden, zum Laserfügen, Laserhärten, Laserlegieren, Laserauftragsschweißen oder Laserabtragen. Die Laserbearbeitung in einer solchen Arbeitsstation kann aber auch zur Vorbereitung oder Nachbereitung eines Umform- oder Trennvorganges in einer vorgelagerten bzw. nachgeordneten Arbeitsstation dienen.

Vorteilhaft kann die Laserstrahlung aber auch in derselben Arbeitsstation zusammen mit Umform- und/oder Trennwerkzeugen zur Vorbereitung, Unterstützung oder Nachbereitung der Trenn- und/oder Umformvorgänge eingesetzt werden.

Es kann auch vorgesehen sein, mit einer einzelnen Laserquelle, z.B. über Strahlteiler und Lichtleitfasern, Linsen und/oder Spiegel, mindestens zwei räumlich getrennte Arbeitsstationen zur Bearbeitung eines Werkstückes mit Laserstrahlung zu versorgen. Dabei können Mittel zur Weiterleitung, Verteilung, Umleitung und/oder Formung der aus der Laserquelle stammenden Laserstrahlung in den Arbeitsstationen selbst integriert sein.

Die Laserstrahlung kann auf eine Werkstückoberseite und/oder auf eine Werkstückunterseite eingestrahlt werden. Als Werkstückoberseite wird die Werkstückseite bezeichnet, auf die ein mechanisches Werkzeugteil, zum Beispiel eine Stanze, Schneide oder Presse oder ein Umformwerkzeug beim Einsatz auftrifft.

Die im Bearbeitungswerkzeug integrierten Mittel zur Bearbeitung des Werkstückes mit Laserstrahlung können im Werkzeugoberteil und/oder im Werkzeugunterteil vorgesehen werden. Im Beispiel des Werkzeugoberteiles kann dieses geteilt werden, um zwischen zwei Werkzeugoberteilbereichen oder Werkzeugoberteil-Teilstücken ein Element der Lasereinstrahlmittel vorzusehen. Es kann in einem z.B. durch einen Spalt oder einen Kanal gebildeten Durchgang oder Zwischenraum beispielhaft ein Strahlumlenkmittel, insbesondere ein Umlenkspiegel, vorgesehen werden, der die aus einer Laserquelle stammende Laserstrahlung auf die Werkstückoberfläche lenkt. Anstelle des Strahlumlenkmittels kann jedoch auch eine Laserquelle, zum Beispiel ein Diodenlaser, unmittelbar im Werkzeugoberteil eingesetzt werden. In entsprechender Weise können die Mittel zur Laserbearbeitung auch im Werkzeugunterteil vorgesehen werden.

Der Durchgang oder Zwischenraum kann vorteilhaft so gestaltet sein, dass die Einstrahlung der Laserstrahlung seitlich, das heißt schräg zu einer möglichen Hubbewegung des betreffenden Werkzeugteils, z. B. in einem Winkel von etwa 90° erfolgt. Auf diese Weise kann ein Ausweiten des Arbeitsraums für die Integration der Mittel zur Einstrahlung der Laserstrahlung weitgehend vermieden werden. Für den Einbau des erfindungsgemäßen Bearbeitungswerkzeugs sind Änderungen an konventionellen Pressen somit nicht erforderlich, da keine Störkonturen mit Pressentisch oder Pressenstößel entstehen. Ein Rüstvorgang wird nicht erschwert, da Hinterschnitte mit Teilen der Presse, insbesondere dem Pressentisch und dem Pressenstößel vermieden werden können.

Das im Durchgang oder Zwischenraum des Werkzeugoberteils oder des Werkzeugunterteils angeordnete Element der Laserbearbeitungsmittel kann so fixiert sein, dass es einer Bewegung, zum Beispiel einer Hubbewegung, des entsprechenden Werkzeugteils relativ zu einem Tischelement nicht folgt. Dies kann z.B. über eine an dem Tischelement oder an dem gegenüberliegenden Werkzeugteil fixierte Haltevorrichtung realisiert werden. Bei dem Tischelement kann es sich z.B. um eine Spannplatte handeln.

Das Element zur Laserbearbeitung kann so angeordnet sein, dass das zu bearbeitende Werkstück örtlich und/oder zeitlich vor dem Trenn- und/oder Umformvorgang mit Laserstrahlung beaufschlagt wird. Insbesondere für umformende Bearbeitung ist die örtlich vorgelagerte Laserbestrahlung vorteilhaft, da in Folgeverbund- und Transferwerkzeugen in der Regel aufgrund beidseitig vollflächig schließender Werkzeugaktivteile die umzuformenden Blechbereiche am Ort der Umformung einer direkten Laserbestrahlung nicht zugänglich sind. Aber auch bei Schneidvorgängen ist das örtliche Vorlagern der Laserbestrahlung vorteilhaft, da so Beeinträchtigungen der Lasereinstrahlung, z.B. durch Stanzabfälle bei von unten eingestrahlter Laserstrahlung, vermieden werden können. Aufwendige Aufbauten, wie sie z.B. bei einer Führung der Laserstrahlung durch einen hohlen Schneidstempel (siehe z. B. DE 102 48 207 B4) gegeben sind und die zudem für viele Anwendungen zu einer unzureichenden Stabilität des Schneidstempels führen können, werden vermieden. Die vorgelagerte Bestrahlung, insbesondere bei Einsatz eines oder zweier Werkzeugspalte zur Zuführung der Laserstrahlung mittels eines Spiegels, erlaubt eine ungehinderte und weitgehend prozesssichere einseitige oder beidseitige Bestrahlung der umzuformenden Werkstückbereiche. Soweit die Einstrahlung der Laserstrahlung allein der Unterstützung oder Vor- oder Nachbereitung eines weiteren Bearbeitungsvorganges dient, kann der Teil des Bearbeitungswerkzeuges, in der die Lasereinstrahlung und die z.B. nachfolgende mechanische Bearbeitung erfolgt, als eine einzelne Arbeitsstation betrachtet werden.

Die Laserbeaufschlagung des Werkstückes kann aber auch am Ort des Trenn-und/oder Umformvorganges erfolgen. Hierfür kann im Falle der Laserbeaufschlagung auf die Werkstückoberseite vorgesehen sein, die Laserstrahlung durch das umformende und/oder trennende Werkzeug hindurch zu führen.

Bei der Laserquelle kann es sich um eine Konstantlaserquelle handeln. Es kann jedoch auch ein Scanner eingesetzt werden, mit dem die Laserstrahlung entlang vorgegebener Konturen auf dem Werkstück verfahren werden kann.

Es kann auch vorteilhaft sein, Strahlumlenkmittel, insbesondere Spiegel, einzusetzen. Ein solches Strahlumlenkmittel kann besonders vorteilhaft in einem z. B. spaltartigen Zwischenraum oder einem sonstigen Durchgang des Werkzeugoberteils oder des Werkzeugunterteils angeordnet sein. Die Strahlumlenkung erlaubt den Einsatz eines hochdynamischen Laserscannersystems, das z.B. auf einer Spannplatte des Bearbeitungswerkzeuges angeordnet sein kann, was einen allenfalls geringen Rüstaufwand auch für bestehende Bearbeitungswerkzeuge und große Arbeitsabstände und damit auch Arbeitsbereiche bedeuten kann. Die Optik des Scanners lässt sich so auf einfache Weise vor Verschmutzungen und Schwingungen schützen. Auch die Änderung der Bestrahlungsrichtung, z.B. von der Bestrahlung von oben zur Bestrahlung von unten, lässt sich einfach über den Wechsel des Halters für die Strahlumlenkung durchführen. Außerdem können der Scanner und/oder die Mittel zur Strahlumlenkung z.B. über einen Zwischenadapter einfach in der Höhe umgestellt werden, ohne dass ein weitergehendes Versetzen nötig ist.

Das oder die in einem z. B. spaltartigen Zwischenraum oder einem sonstigen Durchgang des Werkzeugoberteils oder des Werkzeugunterteils angeordnete(n) Strahlumlenkmittel kann (können) in seiner (ihrer) Ausrichtung steuerbar sein, um die Scanbewegung des umgelenkten Strahls durchzuführen oder zu unterstützen. Das oder die Strahlumlenkmittel kann bzw. können auch fixiert sein, und die Scanbewegung wird mittels anderer optischer Mittel in der Strahlzuführung zum Strahlumlenkmittel hin vollzogen.

Das erfindungsgemäße Bearbeitungswerkzeug kann in einem Pressensystem, z.B. in einer Exzenterpresse, eingebaut sein.

Im Folgenden ist eine beispielhafte Ausbildungsform der erfindungsgemäßen Vorrichtung anhand von Figuren dargestellt.

Es zeigt
- Fig. 1:: Ein Folgeverbundwerkzeug mit integrierter Laservorrichtung,
- Fig. 2:: das Folgeverbundwerkzeug gemäß Fig. 1 mit jeweils nur einem Teil des Werkzeugoberteils und des Werkzeugunterteils,
- Fig. 3:: ein Schema zur Verdeutlichung des Arbeitsablaufes mit Einstrahlung der Laserstrahlung auf eine Blechoberseite, und
- Fig. 4:: ein Schema zur Verdeutlichung der Arbeitsweise mit Einstrahlung der Laserstrahlung auf die Blechunterseite.

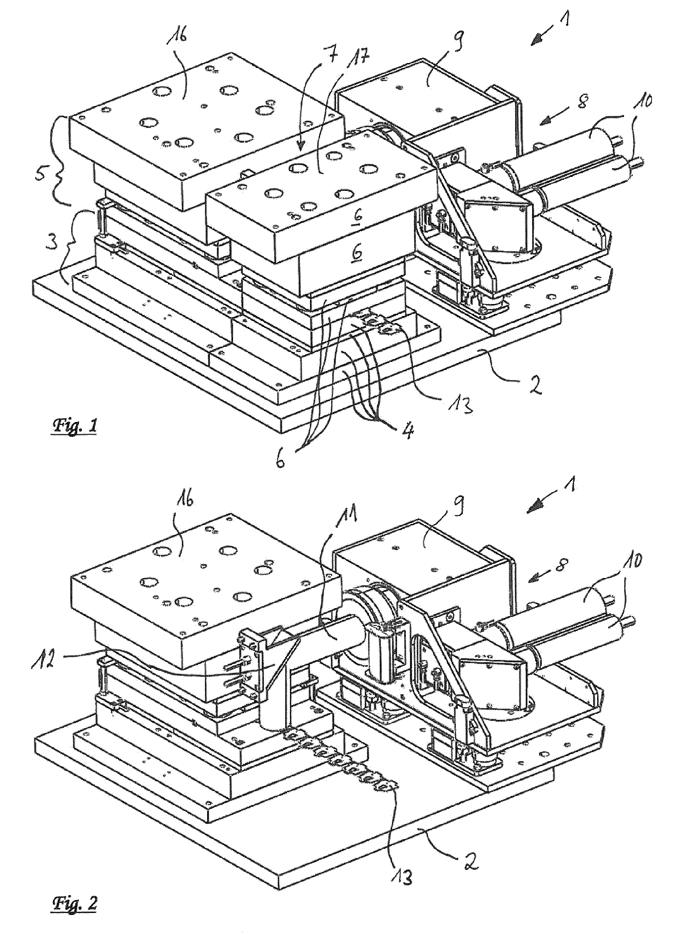

Die Figuren 1 und 2 zeigen ein Folgeverbundwerkzeug 1, in dem mehrere Umform-und/oder Trennbearbeitungen auf ein Werkstück 13 ausgeübt werden. Eine Spannplatte 2 trägt ein Werkzeugunterteil 3 mit mehreren Gestellplatten 4. Die Spannplatte ist an einem hier nicht dargestellten Pressentisch einer Presse fixiert, in der das Folgeverbundwerkzeug 1 integriert ist. Oberhalb des Werkzeugunterteils 3 befindet sich ein ebenfalls Gestellplatten 6 aufweisendes Werkzeugoberteil 5, welches an einem ebenfalls nicht dargestellten Pressenstößel der Presse fixiert ist.

Das Werkzeugoberteil 5 ist durch einen Spalt 7 in ein erstes Oberteilstück 16 und ein zweites Oberteilstück 17 zweigeteilt. In Fig. 2 ist das Folgeverbundwerkzeug 1 ohne das in Betrachtungsrichtung vordere zweite Oberteilstück 17 sowie ohne einen Teil des Werkzeugunterteils 3 dargestellt, so dass im Spalt 7 vorhandene Elemente sichtbar sind.

Auf der Spannplatte 2 ist des Weiteren eine Vorrichtung zur Laserbestrahlung 8 montiert, die einen Laserscanner 9 und Anschlüsse für die Medienversorgung 10 des Laserscanners 9 aufweist. Aus dem Laserscanner 9 austretende Laserstrahlung 11 wird in Fig. 2 durch eine Umhüllende symbolisiert, die den Schwenkbereich der Laserstrahlung 11 andeutet. Der eigentliche Laserstrahl ist sehr viel feiner. Die Laserstrahlung 11 wird seitlich in den Spalt 7 eingestrahlt und über einen im Spalt 7 befindlichen Umlenkspiegel 12 auf das bandförmige Werkstück 13 gelenkt. Der Umlenkspiegel 12 ist in hier nicht dargestellter Weise ebenfalls am Pressentisch 2 ortsfest fixiert, so dass der Umlenkspiegel 12 einer Bewegung des Werkzeugoberteils 5 nicht folgt.

Das Werkstück 13 tritt zunächst in den das erste Oberteilstück 16 aufweisenden Teil des Folgeverbundwerkzeuges 1 ein und wird dort bereits mehreren Arbeitsgängen, z.B. Lochen und seitliches Ausklinken, ausgesetzt. Die Strecke unter dem Oberteilstück 16 umfasst somit bereits mehrere Arbeitsstationen. Nach dem Austritt aus dem Oberteilstück 16 wird das Werkstück 13 im Spalt 7 mit der Laserstrahlung 11 erwärmt, um eine anschließende, z. B. umformende, Weiterverarbeitung vorzubereiten. Diese Weiterverarbeitung ist in den Fig. 1 und 2 nicht dargestellt.

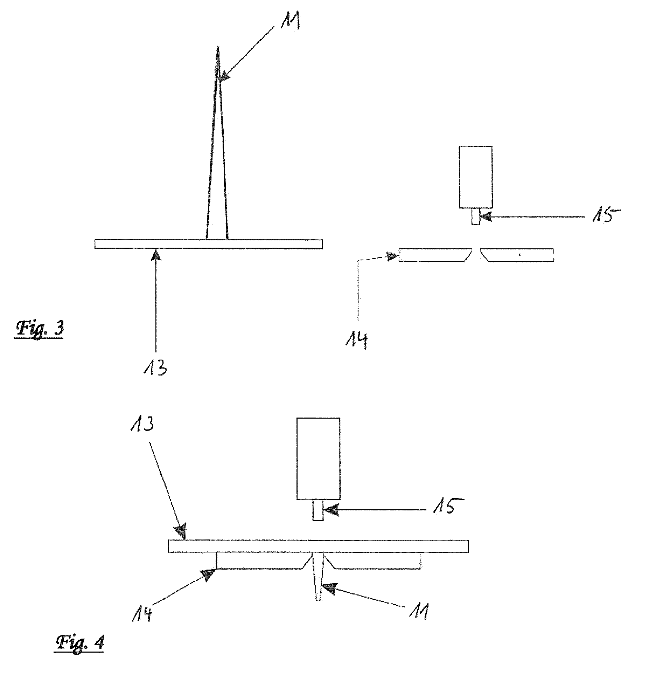

Fig. 3 zeigt schematisch den Verlauf einer möglichen Bearbeitungsvariante in einer Arbeitsstation 1 eines Folgeverbundwerkzeuges. Das Werkstück 13 wird zunächst auf seiner Oberseite mit der Laserstrahlung 11 bestrahlt, bevor es dann auf eine Matrize 14 aufgelegt und mit einem Stanzwerkzeug 15 weiter bearbeitet wird. Während des Transportes des Werkstückes 13 zum Stanzwerkzeug 15 hin kann sich über die Wärmeleitung ein weitgehend homogenes Temperaturprofil über den Blechquerschnitt einstellen.

In einer Variante nach Fig. 4 wird das Werkstück 13 durch die Matrize 14 hindurch von unten mit Laserstrahlung 11 bestrahlt. Das Stanzwerkzeug 15 wird dann unmittelbar nach oder noch während der Bestrahlung durch die Laserstrahlung 11 eingesetzt.

### Bezugszeichenliste

- 1: Folgeverbundwerkzeug
- 2: Spannplatte
- 3: Werkzeugunterteil
- 4: Gestellplatte
- 5: Werkzeugoberteil
- 6: Gestellplatte
- 7: Spalt
- 8: Vorrichtung zur Laserbestrahlung
- 9: Laserscanner
- 10: Anschluss für Medienversorgung
- 11: Laserstrahlung
- 12: Umlenkspiegel
- 13: Werkstück
- 14: Matrize
- 15: Stanzwerkzeug
- 16: erstes Oberteilstück
- 17: zweites Oberteilstück

## Patentansprüche

1. Bearbeitungswerkzeug mit mindestens zwei Arbeitsstationen, von denen mindestens eine zur umformenden und/oder trennenden Bearbeitung eines Werkstückes (13) dient,
**dadurch gekennzeichnet, dass**
Mittel (9, 12) zur Einstrahlung von Laserstrahlung (11) auf das zu bearbeitende Werkstück (13) im Bearbeitungswerkzeug integriert sind.

2. Bearbeitungswerkzeug nach Anspruch 1, **dadurch gekennzeichnet, dass** die Mittel (9, 12) zur Einstrahlung von Laserstrahlung (11) in mindestens einer allein zur Laserbearbeitung dienenden Laser-Arbeitsstation des Bearbeitungswerkzeuges angeordnet sind.

3. Bearbeitungswerkzeug nach Anspruch 1, **dadurch gekennzeichnet, dass** in mindestens einer der Arbeitsstationen sowohl die Mittel (9, 12) zur Einstrahlung von Laserstrahlung (11) als auch zur umformenden und/oder trennenden Bearbeitung des Werkstückes (13) dienende, mechanisch wirkende Werkzeugelemente angeordnet sind, wobei die Laserstrahlung (11) zur Vorbereitung, Unterstützung und/oder Nachbereitung der umformenden und/oder trennenden Bearbeitung vorgesehen ist.

4. Bearbeitungswerkzeug nach einem der vorhergehenden Ansprüche, **dadurch gekennzeichnet, dass** die Mittel (9, 12) zur Einstrahlung von Laserstrahlung (11) zur Versorgung mindestens zweier Arbeitsstationen mit Laserstrahlung (11) einer gemeinsamen Laserquelle (9) eingerichtet sind.

5. Bearbeitungswerkzeug nach einem der vorhergehenden Ansprüche, **dadurch gekennzeichnet, dass** ein erstes, zu einem Tischelement (2) beweglich ausgeführtes Werkzeugteil (5) einen Durchgang (7) für die Laserstrahlung aufweist und zumindest ein Teil der Mittel (9, 12) zur Einstrahlung von Laserstrahlung (11) im Durchgang (7) angeordnet ist.

6. Bearbeitungswerkzeug nach Anspruch 5, **dadurch gekennzeichnet, dass** das oder zumindest eines der im Durchgang (7) angeordneten Mittel (9, 12) zur Einstrahlung von Laserstrahlung (11) zum Tischelement (2) unbeweglich fixiert ist.

7. Bearbeitungswerkzeug nach einem der vorhergehenden Ansprüche, **dadurch gekennzeichnet, dass** es in einem Pressensystem integriert ist.
